# EUROPÄISCHE PATENTSCHRIFT

(11) **EP 2 381 534 B1**
(45) Veröffentlichungstag und Bekanntmachung des Hinweises auf die Patenterteilung: **23.05.2012**
(21) Anmeldenummer: 10305408.6
(22) Anmeldetag: 20.04.2010
(51) Int. Cl.: H01R 4/36, F16B 31/02

(54) **Klemmschraube**
Clamping screw
Vis de serrage

(43) Veröffentlichungstag der Anmeldung: 26.10.2011
(73) Patentinhaber: Nexans, 75008 Paris (FR)
(72) Erfinder: Markgraf, Volker, 95195, Röslau (DE); Zapf, Martin, 95473, Creußen (DE); Dr. Stauch, Gert, 95032, Hof (DE); Grötsch, Peter, 95111, Rehau (DE)
(74) Vertreter: Döring, Roger

(56) Entgegenhaltungen:
- EP-A1- 0 750 723
- EP-A1- 1 626 187
- GB-A- 2 406 626

## Beschreibung

Die Erfindung bezieht sich auf eine Klemmschraube gemäß dem Oberbegriff des Patentanspruchs 1.

Eine solche Klemmschraube geht aus der EP 1 626 187 A1 hervor.

Eine derartige, auch als "Abreißschraube" bzw. "Abscherschraube" bezeichnete Klemmschraube - im folgenden kurz "Schraube" genannt - wird beispielsweise in der Starkstromtechnik zum Verbinden der elektrischen Leiter zweier Starkstromkabel eingesetzt. Zur Erzielung und Aufrechterhaltung eines elektrisch gut leitenden Kontakts, ist eine feste Verbindung zwischen den Leitern zweier Kabel und einer rohrförmigen metallischen Klemme erforderlich, in welche die Leiter eingesteckt sind. Das könnte durch Verwendung eines sogenannten Drehmomentschlüssels sichergestellt werden, der beim Anziehen der Schraube dann "durchdreht", wenn ein ausreichender Festsitz derselben erreicht ist. So ein Drehmomentschlüssel steht aber auf einer Baustelle oft nicht zur Verfügung. Die Schraube wird daher in der Regel mit einem anderen Werkzeug festgedreht, beispielsweise mit einem einfachen Schraubenschlüssel. Um sicherzustellen und auch um überprüfen zu können, daß die Schraube ausreichend fest angezogen ist, kann sie als Abscherschraube mit mindestens einer Sollbruchstelle ausgerüstet sein, die in ihrem axialen Verlauf als umlaufende Nut angeordnet ist. Der obere Teil der Schraube wird dann abgeschert, wenn die Festigkeit ihrer Sollbruchstelle erreicht ist bzw. überschritten wird. Der dann fehlende Schraubenkopf ist ein Indiz dafür, daß die Schraube ausreichend fest angezogen ist. Die Schraube ragt nach dem Abscheren des Schraubenkopfes nicht oder nur unwesentlich aus der Klemme heraus. Ein über derselben zu montierendes Isolierelement wird daher weder mechanisch beschädigt, noch in seinen Isoliereigenschaften beeinträchtigt. Die Sollbruchstelle unterbricht aber das Gewinde der Schraube, so daß dessen Tragfähigkeit geschwächt wird. Das macht sich umso mehr ungünstig bemerkbar, je mehr derartige Sollbruchstellen bei einer Schraube vorhanden sind. Ein universeller Einsatz solcher Schrauben für Leiter unterschiedlichster Durchmesser ist daher oft nicht möglich.

In der GB 2 406 626 A ist eine Schraube beschrieben, die aus einer mit polygonalem Kopf versehenen Gewindeschraube und aus einer Haube besteht, die im Einsatzfall die Gewindeschraube umgreift. Die Gewindeschraube kann in eine Gewindebohrung einer metallischen Klemme zum Festlegen eines elektrischen Leiters eingeschraubt werden. Die Haube hat an ihrer verschlossenen Stirnseite einen polygonalen Betätigungsteil zum Anlegen eines Werkzeugs, der mit ihrem Hauptteil über eine Sollbruchstelle verbunden ist.

Die Schraube nach der EP 0 750 723 B1 weist in ihrem Verlauf mehrere, als umlaufende Nuten ausgebildete Sollbruchstellen auf, die parallel und mit axialem Abstand zueinander im Gewindeteil der Schraube angeordnet sind. Die Schraube ist außerdem mit einem zentralen Sackloch mit polygonalem Querschnitt ausgerüstet, das bis in die Nähe der am nächsten zur Schraubenspitze liegenden Sollbruchstelle liegt. Zur Betätigung der Schraube ist ein Drehkörper vorgesehen, der aus einem zur Einführung in das Sackloch bestimmten Stift mit polygonalem Querschnitt und einer denselben mit Abstand rundum umgebenden Haube besteht, an welcher der Stift befestigt ist und die außen eine Sechskantmutter zum Anlegen eines Werkzeugs aufweist. Für diese bekannte Schraube gilt wegen der größeren Anzahl von Sollbruchstellen der bereits beschriebene Mangel der verminderten Tragfähigkeit in erhöhtem Maße.

Aus der eingangs erwähnten EP 1 626 187 A1 geht eine Schraube zum Festlegen eines elektrischen Leiters in einer mit einer Gewindebohrung versehenen metallischen Klemme hervor. Die Schraube besteht aus einer mit einem Außengewinde versehenen Abreißschraube, einem in eine zentrale Ausnehmung derselben einsetzbaren Schubelement und einer Überwurfsmutter, welche auf die Abreißschraube aufschraubbar ist. Im Montagezustand ist das Schubelement in die Abreißschraube eingesetzt und die Überwurfmutter ist unter Anlage an dem Schubelement auf die Abreißschraube aufgeschraubt. Das Schubelement wird bei einer Drehung der Überwurfmutter durch dieselbe gegen den Boden der Ausnehmung der Abreißschraube gedrückt.

Der Erfindung liegt die Aufgabe zugrunde, eine vorteilhafte Weiterentwicklung der eingangs geschilderten Schraube anzugeben.

Diese Aufgabe wird entsprechend dem kennzeichnenden Merkmal des Patentanspruchs 1 gelöst.

Diese Schraube hat ein zur Anlage an einem elektrischen Leiter bestimmtes Kontaktteil mit einem Außengewinde, das auf seiner ganzen axialen Höhe ohne Unterbrechung vorhanden ist. Die Tragfähigkeit des Außengewindes bleibt daher ohne Einschränkung bzw. Schwächung während der gesamten Betätigung der Schraube bei dem vorgegebenen Wert erhalten. Die Schraube wird mittels ihres Betätigungsteils, solange im Gewindeloch der Klemme gedreht, bis die Sollbruchstelle in der Scheibe unter dem Druck des Kontaktteils aufgerissen wird. Dieser Zeitpunkt entspricht der Kraft bzw. dem Drehmoment, die bzw. das bis zum Festsitz der Schraube am Leiter auf dieselbe ausgeübt wird. Danach wird das Betätigungsteil auf dem Kontaktteil weiter gedreht, bis es auf der Klemme aufliegt. Wenn es dann mit entsprechender Kraft weitergedreht wird, wird der aus der Klemme herausragende Teil des Kontaktteils abgetrennt bzw. abgerissen.

Das Betätigungsteil der Schraube kann zwei oder mehr Scheiben mit Sollbruchstellen haben, die parallel und mit Abstand zueinander in demselben angeordnet sind. Die Festigkeit der Sollbruchstellen dieser Scheiben ist unterschiedlich. Die Festigkeit der in Montageposition weiter vom Kontaktteil entfernten Scheibe ist höher als die der anderen. Die Schraube ist dann für unterschiedlich dimensionierte Leiter und unterschiedliche Anpreßdrücke einsetzbar.

Ausführungsbeispiele des Erfindungsgegenstandes sind in den Zeichnungen dargestellt.

Es zeigen:
Fig. 1 schematisch eine Verbindungsstelle zwischen den Leitern zweier elektrischer Kabel im Schnitt.
Fig. 2 die beiden Teile einer Klemmschraube nach der Erfindung voneinander getrennt.
Fig. 3 die Klemmschraube mit zusammengefügten Teilen.
Fig. 4 bis 8 unterschiedliche Positionen der Klemmschraube bei ihrer Betätigung.
Fig. 9 eines der Teile der Klemmschraube nach den Fig. 2 und 3 in abgewandelter Ausführungsform.
Fig. 10 und 11 Draufsichten auf ein Teil der Klemmschraube in zwei unterschiedlichen Ausführungsformen.

Im folgenden wird weiter statt des Wortes "Klemmschraube" das kürzere Wort "Schraube" verwendet. Die Schraube besteht aus einem ausreichend festen, elektrisch gut leitenden Metall, vorzugsweise aus Messing oder einer Aluminiumlegierung. Das im folgenden erwähnte Betätigungsteil der Schraube kann beispielsweise auch aus Stahl bestehen.

Das Kontaktteil kann bei entsprechend kleinen Abmessungen als massives Bauteil ausgeführt sein. In bevorzugter Ausführungsform ist das Kontaktteil aber ein Hohlkörper. Diese Ausführungsform des Kontaktteils wird in der folgenden Beschreibung berücksichtigt.

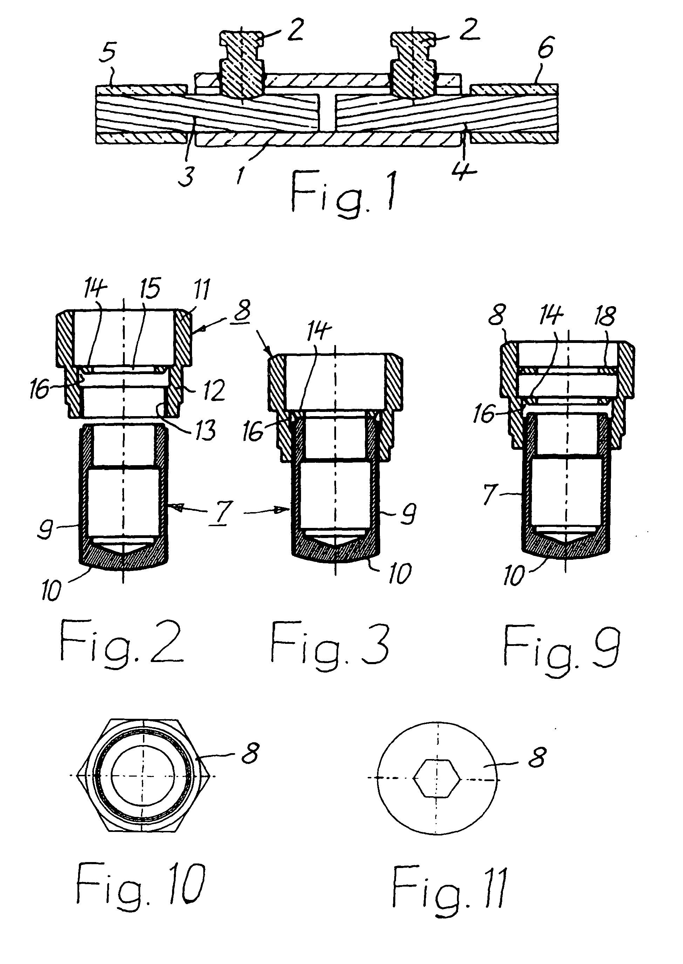

In Fig. 1 ist eine beispielsweise aus einer verzinnten Aluminiumlegierung bestehende, als Rohrstück ausgeführte Klemme 1 dargestellt. Sie hat zwei Gewindebohrungen, in denen jeweils eine mit einem Außengewinde versehene Schraube 2 angeordnet ist. In die Klemme 1 ragen von zwei unterschiedlichen Seiten her elektrische Leiter 3 und 4 zweier elektrischer Kabel 5 und 6 hinein, bei denen es sich insbesondere um Energiekabel handelt. Sie sind in Montageposition durch die Schrauben 2 in der Klemme 1 festgelegt und dadurch elektrisch leitend miteinander verbunden. Die elektrischen Leiter 3 und 4 sind in bevorzugter Ausführungsform als mehrdrähtige Leiter ausgeführt. Sie bestehen vorzugsweise aus Aluminium oder Kupfer. Die Leiter 3 und 4 können auch aus Segmenten aufgebaut sein, in denen jeweils Einzeldrähte zusammengefaßt sind.

Die Schraube 2 besteht aus zwei miteinander zu verschraubenden Teilen, einem Kontaktteil 7 und einem Betätigungsteil 8. Das Kontaktteil 7 ist als zylindrischer Hohlkörper mit einem auf seiner ganzen axialen Länge vorhandenen Außengewinde 9 ausgeführt. Es hat eine zur Anlage an einem elektrischen Leiter 3 bzw. 4 bestimmte Stirnfläche 10. Das Betätigungsteil 8 ist als hülsenförmiger Hohlkörper mit unterschiedlichen lichten Weiten ausgeführt. Sein in Gebrauchslage oberer Bereich 11 kann gemäß Fig. 10 eine als Polygon, insbesondere als Sechseck, ausgeführte Umfangsfläche zur Anlage eines zum Drehen der Schraube geeigneten Werkzeugs aufweisen. Im Betätigungsteil 8 kann aber gemäß Fig. 11 auch eine innen liegende Ausnehmung mit polygonalem, vorzugsweise sechseckigem, Querschnitt zum Einsetzen des Werkzeugs angebracht sein. Der in Gebrauchslage untere Bereich 12 des Betätigungsteils 8 hat ein zum Außengewinde 9 des Kontaktteils 7 passendes Innengewinde 13.

Im Hohlraum des Betätigungsteils 8 ist außerdem eine Scheibe 14 angebracht, die im rechten Winkel zu seiner Achse verläuft und umlaufend fest mit der Wandung des Betätigungsteils 8 verbunden ist. Sie ist mit Vorteil einstückig mit dem Betätigungsteil 8 ausgeführt und kann entsprechend der zeichnerischen Darstellung in den einzelnen Figuren mit einem zentralen Loch 15 versehen sein, durch welches die Herstellung in einstückiger Ausführung ermöglicht wird. Die Scheibe 14 kann auch als Vollscheibe ausgeführt sein und gegebenenfalls nachträglich im Betätigungsteil 8 befestigt werden. Sie ist in jeder Ausführungsform mit einer als Sollbruchstelle 16 dienenden, umlaufenden Rille 15 ausgerüstet. Die Rille verläuft konzentrisch zur Achse des Betätigungsteils 8 etwa kreisförmig mit einem Durchmesser, welcher dem Durchmesser des Kontaktteils 7 an dessen Stirnseite entspricht, die in Arbeitsposition in das Betätigungsteil 8 hineinragt. Mit Vorteil ist der Durchmesser der Sollbruchstelle 16 etwas größer als der Außendurchmesser des Kontaktteils 7, damit dasselbe nach dem Aufbrechen der Scheibe 14 durch die entstandene Öffnung hindurchtreten kann.

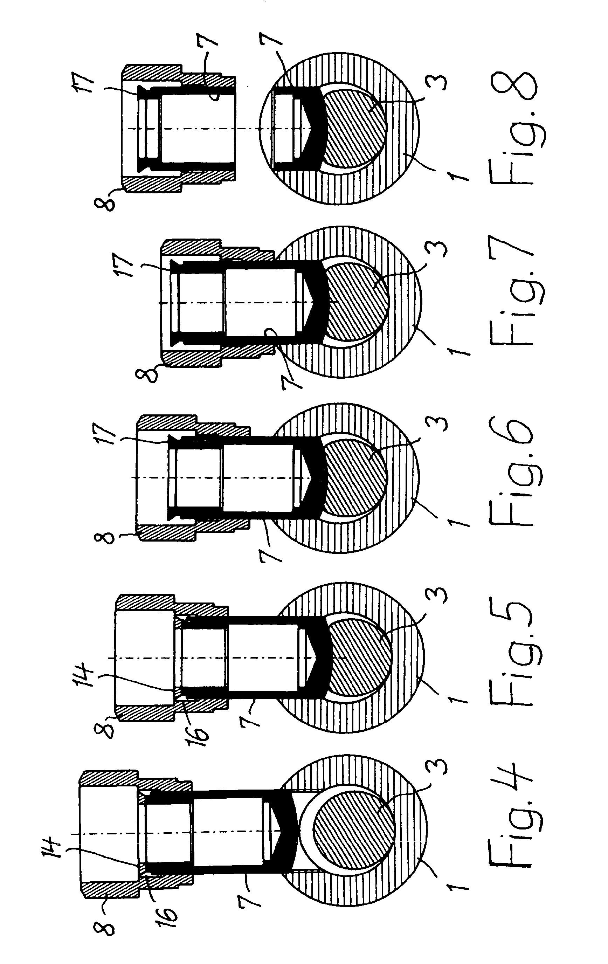

Die Schraube 2 geht im Montagezustand aus Fig. 2 hervor. Das Betätigungsteil 8 ist dabei soweit auf das Kontaktteil 7 aufgeschraubt, daß seine Scheibe 14 an der Stirnseite des Kontaktteils 7 anliegt. Die so fertiggestellte Schraube 2 wird entsprechend den Fig. 4 bis 8 beispielsweise wie folgt zum Befestigen eines elektrischen Leiters 3 in einer Klemme 1 gehandhabt:

Zunächst wird die gemäß Fig. 2 zusammengebaute Schraube 2 in ein Gewindeloch der Klemme 1 eingeschraubt, bis sie entsprechend Fig. 4 an dem elektrischen Leiter 3 anliegt. Das kann von Hand oder bereits mittels eines Werkzeugs - einem handelsüblichen Schraubenschlüssel - durchgeführt werden. Beim weiteren Anziehen der Schraube 2 mittels des Werkzeugs wird der Leiter 3 zusammengedrückt (Fig. 5). Wenn die für den Festsitz der Schraube 2 in der Klemme 1 erforderliche Anpreßkraft bei ihrem weiteren Anziehen erreicht ist oder überschritten wird, bricht das Kontaktteil 7 den inneren Teil 17 der Scheibe 14 an der Sollbruchstelle 16 aus derselben heraus (Fig. 6). Beim Weiterdrehen des Betätigungsteils 8 kann damit das Kontaktteil 7 ungehindert durch den Bereich der Scheibe 14 hindurchtreten, während das Befestigungsteil 8 in Richtung der Klemme 1 auf dem nicht mehr mitgedrehten Kontaktteil 7 weitergedreht wird, bis es gemäß Fig. 7 auf der Klemme 1 aufliegt.

Wenn das Betätigungsteil 8 dann mit ausreichender Kraft weitergedreht wird, wird der aus der Klemme 1 herausragende Teil des Kontaktteils 7 abgetrennt (Fig. 8). Er kann zusammen mit dem Betätigungsteil 8 von der Klemme 1 abgehoben werden. Damit der aus der Klemme 1 herausragende Teil des Kontaktteils 7 im geschilderten Sinne abgetrennt bzw. abgerissen werden kann, muß seine Wandstärke entsprechend bemessen sein. Die Wandstärke muß nur groß genug sein, damit das Kontaktteil 7 die für den Festsitz der Schraube 2 erforderliche Kraft übertragen kann. Eine größere Wandstärke ist jedoch nicht erforderlich. In diesem Sinne ist die Wandstärke des Kontaktteils 7 in Abhängigkeit von der Größe der erwähnten Kraft zu bemessen.

Die Schraube 2 ist ohne Änderungen für elektrische Leiter unterschiedlicher Durchmesser einsetzbar, weil sie ohne vorgegebene Sollbruchstellen in der Wandung des Kontaktteils 7 in jeder geeigneten Höhe abgetrennt werden kann.

Das Kontaktteil 7 kann gemäß Fig. 9 auch mit einer zweiten Scheibe 18 ausgerüstet sein, die parallel und mit Abstand zur Scheibe 14 im Hohlraum des Betätigungsteils 8 angebracht ist. Auch die Scheibe 18 ist mit einer als umlaufende Rille ausgeführten Sollbruchstelle versehen, deren Festigkeit höher als die der Sollbruchstelle der Scheibe 14 ist. Die Schraube 2 kann dann nach Durchbrechen der Scheibe 14 und Anlage des Kontaktteils 7 an der Scheibe 18 fester angezogen werden, bis auch die Scheibe 18 an ihrer Sollbruchstelle durchbrochen wird. In diesem Sinne können auch mehr als zwei Scheiben mit Sollbruchstellen im Hohlraum des Betätigungsteils 8 angebracht sein.

## Patentansprüche

1. Klemmschraube zum Befestigen eines elektrischen Leiters (3,4) in einer als Rohrstück ausgeführten metallischen Klemme (1), welche in ihrer Wandung mindestens ein mit einem Gewinde versehenes Durchgangsloch zur Aufnahme der Klemmschraube (2) hat, die in ihrem Aufbau mindestens eine Sollbruchstelle zur Begrenzung der Kraft aufweist, welche mittels eines an der Klemmschraube angreifenden, eine Drehung um ihre Achse bewirkenden Werkzeugs auf dieselbe ausgeübt wird, wobei die Klemmschraube (2) aus einem zylindrischen, mit einem Außengewinde (9) versehenen, in das Durchgangsloch der Klemme einschraubbaren Kontaktteil (7), das eine zur Anlage an einem in der Klemme befindlichen elektrischen Leiter bestimmte Stirnfläche (10) aufweist, und aus einem hülsenartigen, mit einem Innengewinde (13) versehenen Betätigungsteil (8) besteht, das in Montageposition auf das Kontaktteil (7) aufgeschraubt ist und eine Anlagefläche für das Werkzeug hat, und wobei das Kontaktteil (7) definierte, in Abhängigkeit von der mittels des Werkzeugs aufzubringenden Kraft bemessene Abmessungen hat, die zur Erzeugung des Festsitzes der Schraube (2) in der Klemme erforderlich sind und nach Erreichen des Festsitzes zum Abreißen des aus der Klemme herausragenden Bereichs des Kontaktteiles (7) durch das Betätigungsteil (8) führen, **dadurch gekennzeichnet, daß** in dem Betätigungsteil (8) mindestens eine quer zu seiner Achsrichtung verlaufende und rundum mit seiner Wandung verbundene Scheibe (14) angeordnet ist in welcher die Sollbruchstelle (16) angebracht ist, welche als konzentrisch zur Achse des Betätigungsteils (8) etwa kreisförmig umlaufende Rille mit einem Außendurchmesser des Kontaktteils (7) entsprechenden Durchmesser ausgebildet ist.

2. Klemmschraube nach Anspruch 1, **dadurch gekennzeichnet, daß** das Kontaktteil (7) als Hohlkörper mit einer Wandstärke ausgeführt ist, die zur Erzeugung des Festsitzes der Schraube (2) in der Klemme erforderlich ist und nach Erreichen des Festsitzes zum Abreißen des aus der Klemme herausragenden Bereichs des Kontaktteils (7) durch das Betätigungsteil (8) führt.

3. Klemmschraube nach Anspruch 1 oder 2, **dadurch gekennzeichnet, daß** in dem Betätigungsteil (7) zwei mit Abstand und parallel zueinander verlaufende Scheiben (14,18) mit jeweils einer umlaufenden Sollbruchstelle angeordnet sind.

## Claims

1. A clamping screw for the fastening of an electrical conductor (3) within a metallic clamp (1) having the form of a piece of a tube, which has in its wall at least one tap hole for receiving the clamping screw (2) which has at least one breaking point to limit the driving force that can be applied by a tool acting on the clamping screw (2), wherein the clamping screw (2) comprises a cylindrical contact piece (7) having an outer thread to be screwed into the tap hole of the clamp (1) and an end face (10) to abut to the conductor (3) in mounting position and which also comprises a shell like fastening piece (8) having an inner thread (13) which in working position is screwed onto the contact piece (7) and has a contact surface for the tool and wherein the contact piece (7) has defined dimensions, which depend on the force to be applied by the tool that is needed for the fastening of the clamping screw within the clamp and which lead to a tearing off of that part of the contact piece which protrudes out of the clamp by the fastening piece (8), **characterized in that** a disc (14) is positioned within the fastening piece (8) perpendicular to its axis and fastened to its wall which carries the breaking point (16) which is formed as an annular groove concentrically to the axis of the fastening piece (8) with a diameter which corresponds to the outer diameter of the contact piece (7).

2. A clamping screw according to claim 1, **characterized in that** the contact piece (7) is a hollow body having a wall thickness which is needed for the tight fit of the clamping screw (2) within the clamp and which after achieving of the tight fit causes a breaking of that part of the contact piece (7) which protrudes from the clamp by the fastening piece (8).

3. A clamping screw according to claim 1 or 2, **characterized in that** the fastening piece (8) comprises two discs (14,18) running parallel and with distance to each other each having a breaking point in form of an annular groove.

## Revendications

1. Vis de serrage servant à fixer un conducteur électrique (3, 4) dans une borne métallique (1) prenant la forme d'une pièce tubulaire, ladite borne ayant, dans sa paroi, au moins un trou traversant pourvu d'un filetage pour recevoir la vis de serrage (2) qui comporte au niveau de sa structure au moins un point de rupture théorique pour limiter la force exercée sur elle par un outil engrenant la vis de serrage et provoquant un pivotement autour de son axe, la vis de serrage (2) se composant d'une partie de contact (7) cylindrique pourvue d'un filetage extérieur (9) pouvant être vissé dans le trou traversant de la borne et comportant une surface avant (10) définie pour appuyer contre un conducteur électrique se trouvant dans la borne ainsi que d'une partie d'actionnement (8) de type douille pourvue d'un filetage intérieur (13) qui est vissée dans la position de montage sur la partie de contact (7) et comporte une surface d'appui pour l'outil et la partie de contact (7) présentant des dimensions définies dimensionnées en fonction de la force appliquée par l'outil, lesdites dimensions permettant de réaliser un siège fixe de la vis (2) dans la borne et conduisant, une fois le siège fixe atteint, à l'arrachement de la zone de la partie de contact (7) sortant de la borne par la partie d'actionnement (8), **caractérisée en ce qu'**au moins un disque (14) s'étendant transversalement à sa direction axiale et relié alentour avec sa paroi est disposé dans la partie d'actionnement (8) et que le point de rupture théorique (16) est placé dans celui-ci, ledit point de rupture prenant la forme d'une rainure s'étendant concentriquement par rapport à l'axe de la partie d'actionnement (8) approximativement en forme de cercle avec un diamètre correspondant à un diamètre extérieur de la partie de contact (7).

2. Vis de serrage selon la revendication 1, **caractérisée en ce que** la partie de contact (7) prend la forme d'un corps creux présentant une épaisseur de paroi nécessaire à la réalisation du siège fixe de la vis (2) dans la borne et, une fois le siège fixe atteint, à l'arrachement de la zone de la partie de contact (7) ressortant de la borne du fait de la partie d'actionnement (8).

3. Vis de serrage selon la revendication 1 ou 2, **caractérisée en ce que** deux disques (14, 18) s'étendant parallèlement à une certaine distance l'un de l'autre et présentant respectivement un point de rupture théorique périphérique sont disposés dans la partie d'actionnement (7).
